# EUROPÄISCHE PATENTSCHRIFT

(11) **EP 1 937 501 B1**
(45) Veröffentlichungstag und Bekanntmachung des Hinweises auf die Patenterteilung: **27.12.2017**
(21) Anmeldenummer: 06791781.5
(22) Anmeldetag: 01.09.2006
(51) Int. Cl.: B60K 6/48, F16H 3/00

(54) **DOPPELKUPPLUNGSGETRIEBE FÜR EIN KRAFTFAHRZEUG, INSBESONDERE MIT EINEM HYBRIDANTRIEB BZW. VERFAHREN ZUR STEUERUNG DIESES DOPPELKUPPLUNGSGETRIEBES**
TWIN CLUTCH GEARBOX FOR A MOTOR VEHICLE, IN PARTICULAR PROVIDED WITH A HYBRID DRIVE AND A METHOD FOR CONTROLLING SAID TWIN CLUTCH GEARBOX
BOITE DE VITESSES A DOUBLE EMBRAYAGE POUR UN VEHICULE AUTOMOBILE, EN PARTICULIER EQUIPE D'UN SYSTEME DE PROPULSION HYBRIDE, ET PROCEDE DE COMMANDE DE CETTE BOITE DE VITESSES A DOUBLE EMBRAYAGE

(30) Priorität: 13.10.2005 DE 102005048938
(43) Veröffentlichungstag der Anmeldung: 02.07.2008
(73) Patentinhaber: Volkswagen Aktiengesellschaft, 38440 Wolfsburg (DE)
(72) Erfinder: PETERSEN, Jesper, Benedikt, 38518 Gifhorn (DE)
(86) Internationale Anmeldenummer: PCT/EP2006/008553
(87) Internationale Veröffentlichungsnummer: WO 2007/042109

(56) Entgegenhaltungen:
- EP-A- 1 270 301
- EP-A1- 1 559 603
- EP-A2- 0 776 779
- DE-A1- 10 209 514
- US-A1- 2005 101 432

## Beschreibung

Die Erfindung betrifft zunächst ein Doppelkupplungsgetriebe für ein Kraftfahrzeug, insbesondere mit einem Hybridantrieb, mit einer ersten Getriebeeingangswelle und mit einer zweiten Getriebeeingangswelle, wobei die erste Getriebeeingangswelle über eine erste Kupplung und die zweite Getriebeeingangswelle über eine zweite Kupplung mit einem Verbrennungsmotor, insbesondere mit einer Kurbelwelle des Verbrennungsmotors wirksam verbindbar sind, wobei mehrere einlegbare und/oder herausnehmbare Gangstufen vorgesehen sind, wobei die aufeinanderfolgenden Gangstufen unterschiedlichen Getriebeeingangswellen zugeordnet sind, insbesondere die erste, dritte und/oder fünfte Gangstufe der ersten Getriebeeingangswelle und die zweite, vierte und/oder sechste Gangstufe der zweiten Getriebeeingangswelle zugeordnet sind, wobei eine Elektromaschine vorgesehen ist und die Elektromaschine als Elektromotor und/oder Generator betreibbar ist, und wobei die Elektromaschine mit einer der Getriebeeingangswellen wirksam drehbar verbindbar ist. Weiterhin betrifft die Erfindung ein Verfahren zur Steuerung des zuvor genannten Getriebes, wobei durch die erste Getriebeeingangswelle und die der ersten Getriebeeingangswelle zugeordneten Gangstufen im wesentlichen ein erstes Teilgetriebe und durch die zweite Getriebeeingangswelle und die der zweiten Getriebeeingangswelle zugeordneten Gangstufen im wesentlichen ein zweites Teilgetriebe gebildet ist.

Im Stand der Technik sind unterschiedlich ausgebildete Getriebe, insbesondere auch mit Hybridantrieben bekannt. Das bisher bekannte grundlegende Prinzip der Hybridantriebe geht dahin, dass zwischen dem Verbrennungsmotor und dem Getriebe eines Kraftfahrzeuges eine als Elektromotor ausgebildete Elektromaschine angeordnet ist. Zwischen dem Verbrennungsmotor und der als Elektromotor ausgebildeten Elektromaschine ist eine Kupplung einerseits und andererseits eine weitere Kupplung zwischen der Elektromaschine und dem Getriebe angeordnet. Damit ist auch ein entsprechender Elektrobetrieb zum Betreiben des Kraftfahrzeuges möglich, wenn bspw. die Kupplung zwischen Verbrennungsmotor und der Elektromaschine geöffnet wird, die Elektromaschine als Elektromotor betrieben wird und das Getriebe dann nur durch den Elektromotor angetrieben wird, wobei die Kupplung zwischen Elektromaschine und Getriebe geschlossen ist.

So sind auch Hybrid-Antriebskonzepte bekannt, wo zwei Elektromaschinen, nämlich eine als Elektromotor ausgebildete Elektromaschine und eine als Generator ausgebildete Elektromaschine zur Realisierung des Antriebes eines Kraftfahrzeuges vorgesehen sind. Hierbei ist vzw. zwischen dem Verbrennungsmotor und dem Getriebe, die als Generator ausgebildete Elektromaschine angeordnet, wobei dann die als Elektromotor ausgebildete Elektromaschine ebenfalls mit dem Getriebe separat verbunden ist, um dieses elektrisch anzutreiben. In einem bestimmten Antriebsmodus, insbesondere bei einem Beschleunigungsvorgang, vzw. auch bei einem Anfahrvorgang kann das Fahrzeug bspw. nur mit dem Elektromotor angetrieben werden, ohne dass der Verbrennungsmotor gestartet werden muss. In einem anderen Fall, bspw. wenn das Fahrzeug bremst, also während des Bremsvorganges kann über die als Generator ausgebildete Elektromaschine entsprechend Energie zurückgewonnen und in den Batterien des Fahrzeugs gespeichert werden. Die gespeicherte Energie kann dann wieder der als Elektromotor ausgebildeten Elektromaschine später zur Verfügung stehen, um das Fahrzeug erneut, insbesondere im Elektro-Fahrbetrieb anzutreiben. Hybrid-Antriebe für Kraftfahrzeuge sind daher insbesondere "Energiespar-Konzepte" zum Einsparen von entsprechendem Kraftstoff, der von dem Verbrennungsmotor benötigt wird.

So ist bspw. aus der DE 102 09 514 A1 ein Hybrid-Antriebskonzept bekannt, bei dem eine Elektromaschine vorgesehen ist, die wirksam mit einer der Getriebeeingangswellen über separat vorgesehene Zahnräder verbindbar ist. Die Elektromaschine kann entsprechendes Drehmoment in die Getriebeeingangswelle einleiten, so dass bei einem eingelegten Gang im Getriebe über die Getriebeausgangswelle dann das Fahrzeug angetrieben werden kann. Vzw. ist die hier verwendete Elektromaschine einerseits als Generator, andererseits auch als Elektromotor ausgebildet, so dass einerseits über den Antriebsstrang die Räder antreibbar sind, vzw. beim Startvorgang, andererseits aber auch die Energie entsprechend zurückgewonnen werden kann, insbesondere bei einem Bremsvorgang bzw. bei einem Schubbetrieb des Fahrzeugs.

Schließlich ist aus der EP 0 776 779 A2 ein Hybrid-Antriebskonzept bekannt, bei dem eine Elektromaschine ebenfalls über separat im Getriebe vorgesehene Zahnräder bzw. Wellen mit einer Getriebeeingangswelle wirksam verbunden werden kann.

Die gattungsgemäße US 2005/101432 A1 zeigt einen Hybrid-Antriebskonzept mit einer Elektromaschine, die über die zum Bilden den unterschiedlichen Gangstufen vorhandenen Komponenten des Doppelkupplungsgetriebes einerseits mit der ersten Getriebeeingangswelle wie auch mit der zweiten Getriebeeingangswelle verbindbar ist.

Die im Stand der Technik bisherigen bekannten Antriebskonzepte sind noch nicht optimal ausgebildet, insbesondere werden als Elektromaschinen hier Gleichstrommotoren verwendet, die im wesentlichen immer sehr kompakt und raumfordernd ausgebildet sind und auch ein sehr hohes Eigengewicht aufweisen. Auch die mechanische Kopplung/Verbindung dieser Elektromaschinen zu den einzelnen Getriebekomponenten ist noch nicht optimal ausgebildet. Die bisherigen Realisierungen erfordern daher einen hohen Bauraumbedarf und zusätzlich einen hohen Wartungsaufwand.

Der Erfindung liegt daher die Aufgabe zugrunde, das Doppelkupplungsgetriebe der eingangs genannten Art bzw. das Verfahren zu dessen Steuerung, derart auszugestalten und weiterzubilden, dass einerseits der Bauraumbedarf für ein Hybrid-Antriebskonzept verringert ist, andererseits der damit einhergehende Kosten- und Wartungsaufwand ebenfalls minimiert ist, wobei sich durch die entsprechende Anordnung und Wirkweise eine komfortable Schaltung und damit ein erhöhter Fahrkomfort für den Benutzer ergibt.

Die zuvor aufgezeigte Aufgabe ist nun - zunächst für das Getriebe - dadurch gelöst, dass die Elektromaschine über ein zusätzlich vorgesehenes Getriebe sowohl mit der ersten als auch mit der zweiten Getriebeeingangswelle wirksam verbindbar ist.

Die zuvor aufgezeigte Aufgabe ist nun - für das Verfahren - dadurch gelöst, dass in dem ersten und/oder in dem zweiten Teilgetriebe eine Gangstufe eingelegt ist oder eingelegt wird und zumindest in einem bestimmten Teilbereich des zusätzlich vorgesehenen Getriebes die Drehzahldifferenz zwischen den beiden Teilgetrieben anliegt und hier die Elektromaschine Drehmoment einleiten oder abgreifen kann.

Der Grundgedanke der Erfindung liegt zunächst darin, jede Getriebeeingangswelle mit einer Elektromaschine wirksam zu verbinden. Damit ist ein unabhängiger Betrieb der beiden Getriebeeingangswellen sowie unabhängige Schaltungen und verschiedene Fahrsituationen optimal realisierbar sind, was im Folgenden noch näher erläutert werden wird. Bspw. lässt sich während des Anfahrvorgangs des Kraftfahrzeuges eine als Elektromotor ausgebildete Elektromaschine zuschalten, um das entsprechende Drehmoment an den Rädern zu erhöhen. Auch ist der reine Elektrobetrieb des Kraftfahrzeuges problemlos möglich. Insbesondere ist auch während eines Bremsvorganges über die als Generator ausgebildete Elektromaschine eine Zurückgewinnung von Energie und die Speicherung dieser Energie in einem Energiespeicher, vzw. in den Batterien des Kraftfahrzeuges möglich. Über die entsprechende Zuordnung bzw. die hier speziell realisierte wirksame Verbindung zwischen den jeweiligen Elektromaschinen und den Getriebeeingangswellen werden entscheidende Vorteile erzielt, die - im Endeffekt - den sonst im Stand der Technik bisher üblichen notwendigen Bauraum verringern und die Möglichkeiten des Einsatzes der jeweiligen Elektromaschine erhöhen und die Steuerung des Getriebes optimieren.. Im Ergebnis sind die eingangs beschriebenen Nachteile vermieden und entsprechende Vorteile erzielt.

Es gibt nun eine Vielzahl von Möglichkeiten, das erfindungsgemäße Doppelkupplungsgetriebe auszugestalten und weiterzubilden. Hierfür darf an dieser Stelle zunächst auf die dem Patentanspruch 1 bzw. dem Patentanspruch 15 nachgeordneten Patentansprüche verwiesen werden. Im Folgenden sollen nun zwei bevorzugte Ausführungsbeispiele der Erfindung anhand der folgenden Zeichnung und der dazugehörenden Beschreibung näher erläutert werden. In der Zeichnung zeigt
- Fig. 1: in einer schematischen Darstellung die Anordnung einer Elektromaschine bzw. die wirksame Verbindung der Elektromaschine zu den beiden Getriebeeingangswellen eines Doppelkupplungsgetriebe in vergrößerter Darstellung im Bereich der Kupplungen des Doppelkupplungsgetriebes,
- Fig. 2: in schematischer Darstellung die erste Ausführungsform eines Doppelkupplungsgetriebes mit Verbrennungsmotor und einem angeordneten Planetenradgetriebe zur wirksamen Verbindung der Getriebeeingangswellen mit der Elektromaschine in schematischer Darstellung, und

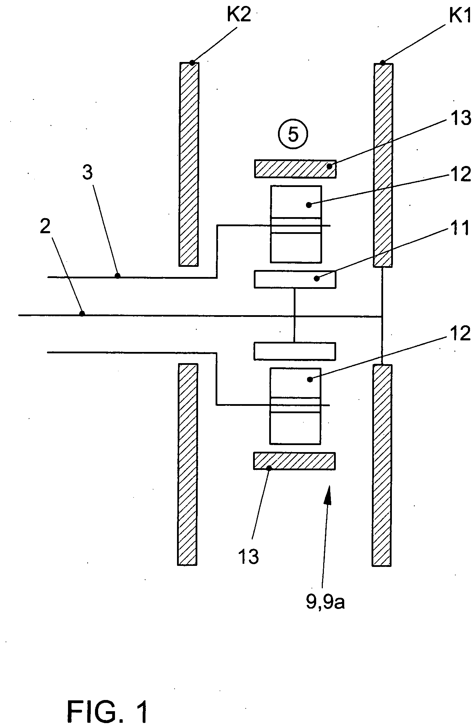

Die Fig. 1 bis 2 zeigen - zumindest teilweise - in schematischer Darstellung ein Doppelkupplungsgetriebe 1 für ein hier nicht näher dargestelltes Kraftfahrzeug. Das hier dargestellte Doppelkupplungsgetriebe 1 weist insbesondere einen Hybridantrieb auf, was im Folgenden noch näher erläutert werden wird. Zunächst darf zu dem Doppelkupplungsgetriebe 1 folgendes ausgeführt werden:

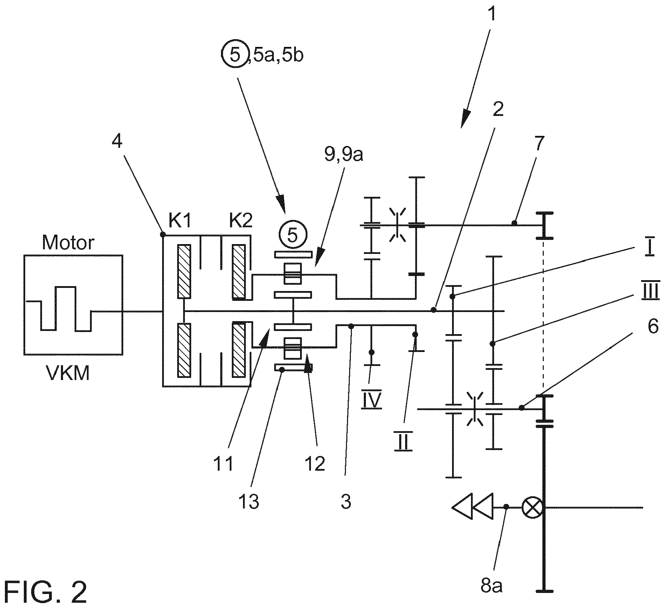

Das Doppelkupplungsgetriebe 1 weist eine erste Getriebeeingangswelle 2 und eine zweite Getriebeeingangswelle 3 auf, wobei die erste Getriebeeingangswelle 2 über eine erste Kupplung K1 und die zweite Getriebeeingangswelle 3 über eine zweite Kupplung K2 mit einem Verbrennungsmotor (Verbrennungskraftmaschine) VKM vzw. mit der Kurbelwelle des Verbrennungsmotors VKM wirksam verbindbar ist. Dies ist insbesondere aus Fig. 2 bzw. 3 ersichtlich dargestellt, wo die Kurbelwelle des Verbrennungsmotors VKM mit dem Kupplungskorb 4 der Kupplungen K1 und K2 entsprechend wirksam verbunden ist.

In dem Doppelkupplungsgetriebe 1 sind nun mehrere Gangstufen einlegbar bzw. herausnehmbar. Hierbei sind die aufeinanderfolgenden Gangstufen jeweils unterschiedlichen Getriebeeingangswellen zugeordnet. Bei den hier dargestellten bevorzugten Ausführungsformen, dargestellt in Fig. 2 und 3 ist der ersten Getriebeeingangswelle 2 die erste und dritte Gangstufe I und III und der zweiten Getriebeeingangswelle 3 die zweite und vierte Gangstufe II und IV zugeordnet sind. Weiterhin ist denkbar, dass auch noch eine fünfte Gangstufe bzw. sechste Gangstufe oder mehr Gangstufen, insbesondere bis zu zehn Gangstufen bspw. bei LKW-Getrieben, vorgesehen sind, die entsprechend auf die beiden Getriebeeingangswellen 2 und 3 verteilt sind.

Weiterhin ist nun eine - erste Elektromaschine 5 vorgesehen, wobei die Elektromaschine 5 als Elektromotor und/oder Generator betreibbar ist und die Elektromaschine 5 mit einer der Getriebeeingangswellen 2 bzw. 3 wirksam verbindbar ist.

Die Fig. 2 zeigt eine erste Ausführungsform eines Doppelkupplungsgetriebe 1r. Die Fig. 2 zeigt ein Doppelkupplungsgetriebe 1, wobei den jeweiligen Getriebeeingangswellen 2 und 3 jeweils eine separate weitere Triebwelle 6 bzw. 7 zugeordnet ist, die über hier nicht näher bezeichnete Zahn-Abtriebsräder auf einen Abtrieb 8a, nämlich auf ein Differential einwirkt bzw. die Drehmomente überträgt.

Weiter sind bei der in der Fig. 2 dargestellte Ausführungsform entsprechende Schiebemuffen zum Ein- und Ausrücken der einzelnen Gangstufen I bis IV in schematischer Darstellung dargestellt, aber nicht näher bezeichnet sind, wobei die hier in der Fig. 2 dargestellten Doppelkupplungsgetriebe 1 bis zu sechs oder sogar mehr Gangstufen aufweisen können, hier allerdings nur jeweils vier Gangstufen I bis IV dargestellt sind.

Die eingangs genannten Nachteile sind nun dadurch vermieden, dass die Elektromaschine 5 über ein zusätzlich vorgesehenes Getriebe 9 sowohl mit der ersten als auch mit der zweiten Getriebeeingangswelle 2 und 3 wirksam verbindbar ist. Dies betrifft im Wesentlichen das Ausführungsbeispiel gemäß den Fig. 1 bzw. 2.

Weiterhin werden für das eingangs genannte Verfahren die entsprechenden Nachteile dadurch vermieden, dass in dem ersten und/oder in dem zweiten Teilgetriebe eine Gangstufe eingelegt ist oder eingelegt wird und zumindest in einem bestimmten Teilbereich des zusätzlich vorgesehenen Getriebes die Drehzahldifferenz zwischen den beiden Teilgetriebe anliegt und hier die Elektromaschine Drehmoment einleiten oder abgreifen kann.

Hierdurch werden nun entscheidende Vorteile erzielt, die im Folgenden ausführlich erörtert werden dürfen. Zunächst darf auf die konkrete Anordnung und spezielle Ausgestaltung bzw. die hier realisierte mechanische Konstruktion bzw. auf den schematischen Aufbau der einzelnen Komponenten der dargestellten Doppelkupplungsgetriebe 1 näher eingegangen werden:

Die Fig. 1 zeigt das grundsätzliche Prinzip in schematischer vergrößerter Darstellung, wobei die Fig. 2 eine erste bevorzugte konkrete Ausführungsform dieses schematischen Prinzips zeigt. Gut ersichtlich ist, dass das Getriebe 9 vzw. hier als Planetenradgetriebe 9a ausgebildet ist.

Das Sonnenrad 11 des Planetenradgetriebes 9a ist mit der ersten Getriebeeingangswelle 2 wirksam verbunden. Die Planetenräder 12 des Planetenradgetriebes 9a sind mit der zweiten Getriebeeingangswelle 3 wirksam verbunden. Schließlich ist das Ringrad 13 des Planetenradgetriebes 9a wirksam mit der Elektromaschine 5 verbunden, die hier nur schematisch als "⑤" dargestellt ist.

Bei dem hier in der Fig. 1 bzw. 2 dargestellten bevorzugten Ausführungsbeispiel wirkt daher die Elektromaschine 5 mit dem Ringrad 13 zusammen. Denkbar ist aber auch eine andere Anordnung des Sonnenrades 11, der Planetenräder 12 bzw. des Ringrades 13 zu den einzelnen Komponenten. Bspw. kann die Elektromaschine 5 auch mit den Planetenrädern oder dem Sonnenrad wirksam verbunden sein, wobei dann das erste und zweite Teilgetriebe mit den dann jeweils übrigbleibenden Komponenten wirksam verbunden ist. Entscheidend ist, dass das Überlagerungsgetriebe, vzw. das Planetenradgetriebe 9a wirksam zwischen der Elektromaschine 5 und dem ersten und zweiten Teilgetriebe, vzw. zwischen der ersten und zweiten Getriebeeingangswelle 2 und 3 wirksam angeordnet ist.

Die Fig. 2 zeigt nun die konkrete Anordnung bzw. Ausbildung des Planetenradgetriebes 9a in einem Doppelkupplungsgetriebe 1. Bei dem hier dargestellten Doppelkupplungsgetriebe 1 ist jeder Getriebeeingangswelle 2 und 3 eine Triebwelle 6 und 7 zugeordnet, die jeweils mit dem Abtrieb 8a über hier nicht näher bezeichnete Zahn-Abtriebsräder wirksam verbunden sind.

Das hier dargestellte Doppelkupplungsgetriebe 1 weist also im wesentlichen zwei Teilgetriebe auf, wobei das erste Teilgetriebe durch die erste Getriebeeingangswelle 2 und die dieser Getriebeeingangswelle 2 zugeordneten Triebwelle 6 und das zweite Teilgetriebe durch die zweite Getriebeeingangswelle 3 und die dieser Getriebeeingangswelle 3 zugeordneten Triebwelle 7 gebildet ist. Das Planetenradgetriebe 9a ist nun als "Überlagerungsgetriebe" zur Überlagerung der Drehmomente dieser beiden Teilgetriebe einsetzbar, was im Folgenden noch ausführlich erläutert werden wird.

Das Planetenradgetriebe 9a ist nun als Überlagerungsgetriebe bei einem Beschleunigungsvorgang des Kraftfahrzeuges einsetzbar, wobei die Elektromaschine 5 dann als Elektromotor eingesetzt wird. Eine Alternative ist, dass das Planetenradgetriebe 9a als Überlagerungsgetriebe bei einem Bremsvorgang des Kraftfahrzeuges eingesetzt wird und die Elektromaschine 5 dann als Generator eingesetzt wird. Auch dies wird im Folgenden noch ausführlich erläutert werden. Wesentlich ist, dass das zusätzlich vorgesehene Getriebe 9 insbesondere als Überlagerungsgetriebe vzw. als Planetenradgetriebe 9a ausgebildet ist. Das Planetenradgetriebe 9a könnte nicht nur einen einfachen Planetensatz, sondern auch einen Ravigneaus - bzw. Simpson-Satz aufweisen. Ebenso ist ein Überlagerungsgetriebe mit Kegelrädern denkbar.

Weiterhin ist mit Hilfe der Elektromaschine 5 die jeweils bei einer Schaltung zuvor freilaufende zu synchronisierende Getriebeeingangswelle 2 bzw. 3 entsprechend synchronisierbar, ohne das die bisher bekannten Synchronisiervorrichtungen verwendet werden müssten. Bspw. ist auch mit der Elektromaschine 5 ein Rückwärtsgang-Modus des Kraftfahrzeuges realisierbar, ohne dass das Doppelkupplungsgetriebe 1 dann ein separates Rückwärtsgang-Zahnrad aufweisen muss. Auch die zuvor genannten Schaltungen bzw. Verfahrensabläufe werden im Folgenden noch näher beschrieben werden.

Vzw. ist die in den Fig. 1 bis 2 dargestellte Elektromaschine 5 als Wechselstrommotoren ausgeführt. Bei einem Beschleunigungsvorgang des Kraftfahrzeuges ist die Elektromaschine 5 als Elektromotor einsetzbar bzw. zuschaltbar, um entsprechende Drehmomente in das Doppelkupplungsgetriebe 1 einzuleiten. Im Gegensatz hierzu ist die Elektromaschine 5 bei einem Bremsvorgang des Kraftfahrzeuges als Generator einsetzbar bzw. zuschaltbar, um entsprechende Energie zu erzeugen, die in einem Energiespeicher, insbesondere in den Fahrzeugbatterien abgespeichert werden kann, damit diese später für den Elektrofahrbetrieb wieder zur Verfügung steht.

Grundsätzlich gilt, dass mit Hilfe der Elektromaschine 5 bei den Schaltungen des Doppelkupplungsgetriebes 1 die zu synchronisierende jeweilige Getriebeeingangswelle entsprechend mit Hilfe einer Elektromaschine 5 synchronisierbar ist oder auch - wie bereits oben erwähnt - durch eine Elektromaschine 5 ein Rückwärtsgang-Modus des Kraftfahrzeuges, also eine Rückwärtsfahrt realisierbar ist, ohne dass das Doppelkupplungsgetriebe 1 ein separates Rückwärtsgang-Zahnrad aufweisen muss.

Bevor nun auf die Möglichkeiten der Schaltungen bzw. des Einsatzes der Elektromaschine 5 als Elektromotor bzw. Generatorausführlich eingegangen wird, darf darauf hingewiesen werden, dass, obwohl dies hier nicht im Einzelnen dargestellt ist, das jeweilige Doppelkupplungsgetriebe 1 natürlich die entsprechenden steuerungstechnischen Komponenten aufweist, insbesondere ein auf elektrischer und/oder elektronischer Basis realisiertes Steuergerät, vzw. mit einem Mikroprozessor, sowie auch die entsprechenden Drehzahlsensoren zur Messung der Drehzahlen der jeweiligen Getriebeeingangswellen 2, 3 bzw. Triebwellen 6, 7 und/oder der Abtriebswelle 8. Auch werden die Aktuatoren zur Betätigung der hier teilweise nur schematisch angedeuteten Schiebemuffen etc. bzw. die Hydrauliksteuerung auch über das entsprechende Steuergerät realisiert.

Bei den in den Fig. 1 bzw. 2 gezeigten Ausführungsformen kann die Elektromaschine 5 und das Planetenradgetriebe 9a bzw. ein Überlagerungsgetriebe als "Add-On-Lösung" an ein bereits existierendes Doppelkupplungsgetriebe 1 angebaut werden. Damit wären auch existierende Doppelkupplungsgetriebe entsprechend nachrüstbar. Die Fig. 1 und 2 zeigen, dass es vorteilhaft ist, dass ein Überlagerungsgetriebe, nämlich vzw. das Planetenradgetriebe 9a eine koaxiale Anbindung zum ersten Teilgetriebe und zum zweiten Teilgetriebe aufweist. Dies ist am einfachsten mit einem Planetenradgetriebe 9a realisierbar. Die Fig. 1 zeigt, dass das Planetenradgetriebe 9a hier zwischen den Reibscheiben der Kupplungen K1 und K2 angeordnet ist. Die hier in der Fig. 2 dargestellte Anordnung bzw. Zuordnung der ersten Getriebeeingangswelle 2 und der zweiten Getriebeeingangswelle 3 zu den Komponenten, d. h. zu dem Sonnenrad 11 bzw. zu den Planetenrädern 12 auch umgedreht werden, d. h. in umgekehrter Weise realisiert werden. Schließlich zeigt die Fig. 2 ein außerhalb der Doppelkupplung angeordnetes Planetenradgetriebe 9a, das aber ebenfalls koaxial zu den beiden Getriebeeingangswellen 2 und 3 angeordnet ist.

Im Folgenden sollen nun unterschiedliche Fahrbetriebszustände des Kraftfahrzeuges sowie Schaltungsmöglichkeiten und die verschiedenen Einsätze der Elektromaschine 5 zunächst für das Ausführungsbeispiel der Fig. 1 bzw. 2 näher erläutert werden:

Das Doppelkupplungsgetriebe 1 kann zunächst ohne Hybridantrieb, also ohne den Betrieb der Elektromaschine 5 als Elektromotor 5a bzw. Generator 5b betrieben werden. Dies funktioniert dann wie in üblicher Weise, da die Drehmomente komplett von dem Verbrennungsmotor VKM über die jeweilige Kupplung K1 oder K2 auf die jeweilige Getriebeeingangswelle 2 oder 3 und von hier aus dann über die Triebwellen 6 bzw. 7 im Endeffekt auf den Abtrieb 8a übertragen wird.

Die Elektromaschine 5 kann nun unterschiedlich eingesetzt werden. Im Wesentlichen ist vzw. hierfür auch entscheidend, dass zumindest in einem Teilgetriebe des Doppelkupplungsgetriebes 1 eine Gangstufe eingelegt ist und an dem Ringrad 13 des Planetenradgetriebes 9a die Drehzahldifferenz zwischen den Teilgetrieben anliegt und hier, also an dem Ringrad 13 dann die Elektromaschine 5 vzw. zusätzliches Drehmoment einleiten oder auch abgreifen kann.

So kann die Elektromaschine 5 zunächst als Elektromotor, nämlich als Starter für den Verbrennungsmotor VKM eingesetzt werden, wenn das Fahrzeug steht. Dies kann wie folgt realisiert werden:

Auf dem Teilgetriebe 1 sind vzw. zwei Gangstufen gleichzeitig eingelegt, während auf dem Teilgetriebe 2 keine Gangstufe eingelegt ist. Dadurch ist das Teilgetriebe 1 blockiert. Wird nun über das Ringrad 13 Drehmoment über den Elektromotor 5a eingeleitet, so steht das Sonnenrad 11, die Planetenräder 12 bewegen sich aber, wodurch die zweite Getriebeeingangswelle 3 angetrieben wird und, wenn die Kupplung K2 geschlossen wird, der Verbrennungsmotor VKM hierdurch gestartet werden kann. Dieser zuvor beschriebene Fall geht natürlich auch umgekehrt, nämlich - wenn analog - das Teilgetriebe 2 durch Einlegung zweier Gangstufen blockiert wird und dann der Motor durch das Schließen der ersten Kupplung K1 gestartet wird.

Wenn das Fahrzeug im Elektrobetrieb fährt kann der Verbrennungsmotor VKM wie folgt gestartet werden:

Das Fahrzeug rollt zunächst im reinen Elektrobetrieb, da die Elektromaschine 5 als Elektromotor 5a eingesetzt wird und hier entsprechendes Drehmoment über das Planetenrad 13 eingeleitet wird. Es ist nunmehr bspw. eine Gangstufe auf dem ersten Teilgetriebe, also auf der ersten Getriebeeingangswelle 2 eingelegt, auf dem zweiten Teilgetriebe ist ebenfalls eine Gangstufe eingelegt, die beiden Kupplungen K1 und K2 sind allerdings geöffnet. In diesem Fall wird das Fahrzeug über das Planetenradgetriebe 9a als Überlagerungsgetriebe über das Ringrad 13 mit dem Elektromotor 5a als Elektromaschine 5 angetrieben. Wird nun die Kupplung K1 oder K2 kurzzeitig geschlossen, so wird der Verbrennungsmotor VKM zu einer entsprechenden Drehzahl hochgeschleppt und kann entsprechend gestartet werden. Vzw. wird beim Einkupplungsvorgang der entsprechenden Kupplung K1 bzw. K2 ein wenig zusätzliches Drehmoment über das Ringrad 13 durch die Elektromaschine 5 bzw. den Elektromotor 5a eingeleitet, um die Fahrzeuggeschwindigkeit konstant zu halten.

Eine weitere Alternative des Einsatzes der Elektromaschine 5 ist bspw. der Einsatz der Elektromaschine 5 als Elektromotor 5a bei einem Beschleunigungsvorgang, wobei hier nunmehr zusätzlich Drehmoment in das Doppelkupplungsgetriebe 1 eingeleitet werden kann. Diese Funktion wird auch als "Boost-Funktion" bezeichnet. Dies wird wie folgt realisiert:

So kann auf dem ersten Teilgetriebe eine Gangstufe eingelegt werden, wobei die erste Kupplung K1 geschlossen ist. Auf dem zweiten Teilgetriebe ist ebenfalls eine Gangstufe eingelegt, wobei die zweite Kupplung K2 allerdings geöffnet ist. Während des Beschleunigungsvorganges kann nun über das Ringrad 13 die Elektromaschine 5, nämlich als Elektromotor 5a Drehmoment einleiten. Die Momentenverteilung zwischen dem Sonnenrad 11 und den Planetenrädern 12 ist vzw. 33% zu 66%. Da das Planetenradgetriebe 9a hier als Überlagerungsgetriebe wirkt kann der Elektromotor 5a Drehmoment übertragen, ohne dass das Getriebe blockiert, nämlich so lange wie die zweite Kupplung K2 geöffnet ist. Es können nun jeweils unterschiedliche Gangstufen, also im unterschiedlichen Kombinationen auf den beiden Teilgetrieben eingelegt werden. Hierdurch kann bei einem Beschleunigungsvorgang das Übersetzungsverhältnis an dem Planetenradgetriebe 9a zwar unterschiedlich ausfallen, allerdings kann hierdurch der Drehzahlbereich des Elektromotors 5a optimiert werden. Dies ist insbesondere für einen Asynchron-Wechselstrommotor vorteilhaft.

Umgekehrt ist auch der Fall denkbar, dass die Elektromaschine 5 als Generator 5b eingesetzt wird, und zwar vzw. bei einem Bremsvorgang des Kraftfahrzeuges. Hierbei greift die Elektromaschine 5, nämlich der Generator 5b dann Drehmoment am Ringrad 13 ab. Der Vorgang läuft im wesentlichen umgekehrt zu dem oben beschriebenen Beschleunigungsvorgang, wobei in jedem Teilgetriebe jeweils eine Gangstufe eingelegt ist, aber eine Kupplung bspw. K1 geschlossen und die andere Kupplung K2 entsprechend geöffnet ist.

Die oben beschriebenen Vorgänge beim Beschleunigen oder Bremsen des Fahrzeugs, wobei Elektromaschine 5 als Elektromotor 5a bzw. als Generator 5b eingesetzt werden kann, sind auch dahingehend denkbar, dass die jeweils andere Kupplung K1 bzw. K2 geöffnet bzw. geschlossen ist und der Kraftfluss über die jeweils anderen Teilgetriebe umgekehrt läuft. Diese umgekehrten Fallkonstellationen sollen daher im Folgenden grundsätzlich mit dem Wort "analog" bezeichnet werden, um unnötige Ausführungen zu vermeiden. Zur Vermeidung von unnötigen Wiederholungen werden diese "umgekehrten analogen Fälle" hier nicht immer ausführlich beschrieben.

Weiterhin ist der Fall denkbar, dass das Fahrzeug nur im Elektrobetrieb läuft, also ohne Verbrennungsmotor VKM betrieben wird. Hierzu ist insbesondere eine Gangstufe auf einem der Teilgetriebe, insbesondere auf dem ersten Teilgetriebe eingelegt, wobei die erste Kupplung K1 dann geöffnet ist, nämlich nicht mit dem Verbrennungsmotor VKM verbunden ist. Auf dem zweiten Teilgetriebe ist dann ebenfalls eine Gangstufe eingelegt, wobei die zweite Kupplung K2 aber ebenfalls geöffnet ist, also ebenfalls nicht mit der Verbrennungsmotor VKM verbunden ist. Über das Ringrad 13 kann nun die Elektromaschine 5, nämlich den Elektromotor 5a das Fahrzeug entsprechend antreiben. Aufgrund der optimierten Wahl der einzelnen Gangstufen der unterschiedlichen Teilgetriebe kann nun die Übersetzung so optimiert werden, dass hierfür den Elektromotor 5a die jeweils optimale Übersetzung gefunden wird. Zu jeder Zeit bei dem reinen Elektrobetrieb des Fahrzeuges kann nun der Verbrennungsmotor VKM eingeschaltet werden. Hierzu wird dann die Kupplung K1 oder die Kupplung K2 zunächst geschlossen, um den Verbrennungsmotor VKM zu einem bestimmten Drehmoment bzw. Drehzahl hochzuschleppen. Ist der Verbrennungsmotor VKM angesprungen und übernimmt die Übertragung des Drehmomentes, kann die Elektromaschine 5 abgeschaltet werden.

Es ist auch der Fall denkbar, dass im reinen Elektrobetrieb des Kraftfahrzeuges eine Gangstufe in einem Teilgetriebe gewechselt wird. Bspw. ist im ersten Teilgetriebe eine Gangstufe eingelegt und im zweiten Teilgetriebe eine Gangstufe eingelegt. Der Fahrbetrieb wird über die Elektromaschine 5, nämlich den Elektromotor 5a realisiert, also Drehmoment über das Ringrad 13 mit Hilfe der Elektromaschine 5 eingeleitet. Beide Kupplungen K1 und K2 sind zunächst geöffnet. Eine Kupplung, bspw. K2 wird kurzgeschlossen und der Verbrennungsmotor VKM wird hochgeschleppt, wenn der Verbrennungsmotor VKM läuft, kann das Fahrzeug über das zweite Teilgetriebe angetrieben werden und die Elektromaschine 5, also der Elektromotor wird kurz ausgeschaltet. Damit läuft nun das erste Teilgetriebe lastlos und es kann eine Gangstufe auf dem ersten Teilgetriebe gewechselt werden. Wenn der Kraftschluss nach dem Gangwechsel auf dem ersten Teilgetriebe wieder hergestellt ist, kann die Elektromaschine 5, also der Elektromotor 5a wieder gestartet werden und ein entsprechendes Drehmoment über das Ringrad 13 kann dem Doppelkupplungsgetriebe 1 wieder zugeleitet werden. Es kann dann wieder ein reiner Elektrobetrieb durchgeführt werden, wenn nämlich die Kupplung K2 bspw. wieder geöffnet wird. Der hier geschilderte Fall ist auch "umgekehrt" also "analog" möglich, wenn die erste Kupplung K1 kurzgeschlossen wird, um den Verbrennungsmotor VKM hochzuschleppen etc.. Zur Vermeidung von Wiederholungen wird dieser Fall nicht explizit beschrieben. Es kann aber zwischen Elektrobetrieb und Verbrennungsbetrieb hin- und hergeschaltet werden, wie die obigen Ausführungen zeigen.

Auch ist dann hier die Elektromaschine 5 nicht nur als Elektromotor 5a einsetzbar, sondern auch als Generator 5b, so dass bspw. bei einem Bremsvorgang des Kraftfahrzeuges folgende Schaltungen realisiert werden können:

Auf dem ersten Teilgetriebe ist eine Gangstufe eingelegt, wobei auch auf dem zweiten Teilgetriebe eine Gangstufe eingelegt ist. Nun wird das Fahrzeug abgebremst, wobei die Elektromaschine 5 als Generator 5b benutzt wird, so dass über das Ringrad 13 Drehmoment abgegriffen werden kann und Strom für einen Energiespeicher, insbesondere für die Batterien des Kraftfahrzeugs erzeugt und hier abgespeichert werden kann. Dies könnte nicht nur bei einem Bremsvorgang, sondern auch bei einer Bergabfahrt geschehen. Sind beide Kupplungen K1 und K2 geöffnet, so würde das Fahrzeug im reinen Elektrobetrieb laufen. Allerdings ist auch ein Aufladen der Batterien bei einem Bremsvorgang bei eingeschaltetem Verbrennungsmotor VKM möglich, also wenn das Fahrzeug von dem Verbrennungsmotor VKM bspw. über das erste Teilgetriebe mit einer eingelegten Gangstufe bei geschlossener erster Kupplung K1 angetrieben wird. Hier ist dann eine Gangstufe auf dem zweiten Teilgetriebe eingelegt, so dass über das Ringrad 13 das Planetenradgetriebe 9a Drehmoment für den Generator 5b, also für die Elektromaschine 5 erzeugen kann, was hier entsprechend abgegriffen wird. Auch der umgekehrte/analoge Fall, also die Drehmomentenfluss über das jeweils andere Teilgetriebe mit jeweils anderer geöffneter bzw. geschlossener Kupplung K1 bzw. K2 ist denkbar.

Natürlich kann auch ein Aufladevorgang des Energiespeichers bei normalen Fahrbetrieb des Kraftfahrzeuges, durchgeführt werden, also wenn bspw. kein Bremsvorgang oder keine Bergabfahrt durchgeführt wird. Über das Ringrad 13 wird das entsprechende Drehmoment des dann freilaufenden entsprechenden Teilgetriebes abgegriffen und in die Batterien des Fahrzeugs die Energie eingespeist.

Wie bereits oben erwähnt kann die "Boost-Funktion" durchgeführt werden, insbesondere auch dann, wenn das Fahrzeug im Verbrennungsmodus läuft, bspw. ist auf dem ersten Teilgetriebe eine Gangstufe eingelegt und die erste Kupplung K1 geschlossen, wobei also der Verbrennungsmotor VKM das Fahrzeug über das erste Teilgetriebe antreibt. Auf den zweiten Teilgetriebe wird ein entsprechender Gang vorgewählt, also eine Gangstufe eingelegt, wobei die zweite Kupplung K2 aber geöffnet ist. Über das Planetenradgetriebe 9a bzw. über das Ringrad 13 kann nun ein zusätzliches Drehmoment bei Beschleunigungen oder bei Bergauffahrten eingeleitet werden. Analog kann auch in umgekehrter Weise die Drehmomenteneinleitung über das jeweils andere Teilgetriebe erfolgen, wenn die entsprechenden Kupplungen K1 bzw. K2 auch - umgekehrt - geöffnet bzw. geschlossen sind. Die eingeleiteten Drehmomente vom Verbrennungsmotor VKM bzw. von der Elektromaschine 5 verteilen sich daher über beide Teilgetriebe, was die Verzahnungskräfte an den eingelegten Gangstufen der Teilgetriebe verringert.

Denkbar ist auch, dass bei Anfahrvorgängen, insbesondere Extrem-Beschleunigungen, bei einem Extrem-Beschleunigungsvorgang dann wie bei den Doppelkupplungsgetrieben üblich jeweils eine Gangstufe auf jedem Teilgetriebe eingelegt wird. Hier ist dann beim Anfahrvorgang eine Kupplung, bspw. die erste Kupplung K1 voll geschlossen, während die andere Kupplung, also K2 mit einem gewollten Schlupf durchrutscht, aber zusätzlich entsprechendes Drehmoment vom Verbrennungsmotor VKM an das jeweilige Teilgetriebe überträgt. Hierdurch werden die entsprechenden Laufverzahnungen der Teilgetriebe geschont, weil die Zahnkräfte in den jeweils eingelegten Gangstufen verringert sind. Bei einem derartigen Fall kann dann über den Elektromotor 5a über das Ringrad 13 zusätzliches Drehmoment eingeleitet werden.

Ein weiterer entscheidender Vorteil ist, dass die Synchronisierung einer Getriebeeingangswelle 2 bzw. 3 nun über die Elektromaschine 5 erfolgen kann, ohne dass die bisher bekannten üblichen Synchronisiervorrichtungen eingesetzt werden müssen. Bspw. ist auf dem ersten Teilgetriebe eine Gangstufe eingelegt und das Fahrzeug wird über das erste Teilgetriebe angetrieben, anders ausgedrückt der Verbrennungsmotor VKM treibt das Fahrzeug über das erste Teilgetriebe, also die erste Getriebeeingangswelle 2 und die Triebwelle 6 an. Nunmehr kann auf der zweiten Getriebeeingangswelle 3 des zweiten Teilgetriebes bevor eine Gangstufe eingelegt wird die zweite Getriebeeingangswelle 3 entsprechend synchronisiert werden. Hierzu wird dann das Planetenradgetriebe 9a als Überlagerungsgetriebe genutzt, und entsprechendes Drehmoment über das Ringrad 13 eingeleitet oder abgegriffen, wobei allerdings die zweite Kupplung K2 geöffnet ist. Es kann also vzw. die zweite Getriebeeingangswelle 3 über das Ringrad 13 hochbeschleunigt oder auch gebremst werden, so dass dann nach der erfolgten Synchronisierung auf der zweiten Getriebeeingangswelle 3 bzw. auf dem zweiten Teilgetriebe dann die entsprechende Gangstufe, die gewünscht wird, auch eingelegt werden kann. Die Synchronisierung über die Elektromaschine 5, erfolgt dann auch in Abhängigkeit der Drehzahl der ersten Getriebeeingangswelle 2, da das Planetenradgetriebe 9a über das Sonnenrad 11 ja mit der ersten Getriebeeingangswelle 2 entsprechend verbunden ist. In analoger Weise kann für den umgekehrten Fall dann auch die erste Getriebeeingangswelle 2 entsprechend synchronisiert werden, wenn das Fahrzeug über das zweite Teilgetriebe angetrieben wird.

Schließlich kann auch ein Rückwärtsgang auf elektrische Weise über die Elektromaschine 5 realisiert werden. Das Doppelkupplungsgetriebe 1 benötigt hierzu kein separates Rückwärtsgang-Zahnrad. Für das Rückwärtsfahren wird das Fahrzeug einfach im reinen Elektroantrieb betrieben, hierzu ist bspw. im ersten Teilgetriebe eine Gangstufe eingelegt und die erste Kupplung K1 ist offen. Auf dem zweiten Teilgetriebe ist ebenfalls eine Gangstufe eingelegt und die zweite Kupplung K2 ist ebenfalls geöffnet. Der Verbrennungsmotor VKM kann sogar ausgeschaltet sein. Ein Rückwärtsfahren des Fahrzeuges wird nun dadurch realisiert, dass die Elektromaschine 5 in der jeweils anderen Drehrichtung als üblich betrieben wird und über das Ringrad 13 dann das entsprechende Drehmoment eingeleitet wird, so dass das Fahrzeug dann rückwärts fährt.

Wesentlich ist, dass bei dem in Fig. 2 gezeigten Ausführungsbeispiel also ein zusätzliches Getriebe, nämlich ein Überlagerungsgetriebe, vzw. ein Planetenradgetriebe 9a vorgesehen ist. Denkbar sind auch andere Getriebeformen, die die Funktion eines Überlagerungsgetriebes erfüllen können, bspw. sind auch Ausgleichsgetriebe auf Kegelradbasis denkbar. Wesentlich ist, dass bei dem Ausführungsbeispiel in den Fig. 1 und 2 jeweils nur eine Elektromaschine 5 angeordnet werden muss, die vzw. als Asynchron-Wechselstrommotor ausgeführt ist, d. h. Vergleich zu einem Gleichstrommotor, also weniger Bauraumbedarf und weniger Eigengewicht aufweist.

## Patentansprüche

1. Doppelkupplungsgetriebe (1) für ein Kraftfahrzeug, insbesondere mit einem Hybridantrieb, mit einer ersten Getriebeeingangswelle (2) und mit einer zweiten Getriebeeingangswelle (3), wobei die erste Getriebeeingangswelle (2)über eine erste Kupplung (K1) und die zweite Getriebeeingangswelle (3) über eine zweite Kupplung (K2) mit einem Verbrennungsmotor (VKM), insbesondere mit einer Kurbelwelle des Verbrennungsmotors (VKM) wirksam verbindbar sind, wobei mehrere einlegbare und/oder herausnehmbare Gangstufen (I, II, III, IV)vorgesehen sind, wobei die aufeinanderfolgenden Gangstufen unterschiedlichen Getriebeeingangswellen (2, 3) zugeordnet sind, insbesondere die erste, dritte und/oder fünfte Gangstufe der ersten Getriebeeingangswelle (2) und die zweite, vierte und/oder sechste Gangstufe der zweiten Getriebeeingangswelle (3) zugeordnet sind, wobei eine Elektromaschine (5) vorgesehen ist und die Elektromaschine (5) als Elektromotor (5a) und/oder Generator (5b) betreibbar ist, und wobei die Elektromaschine (5) mit einer der Getriebeeingangswellen (2, 3) wirksam drehbar verbindbar ist, **dadurch gekennzeichnet, dass** die Elektromaschine (5) über ein zusätzlich vorgesehenes Getriebe (9) sowohl mit der ersten als auch mit der zweiten Getriebeeingangswelle (2, 3) wirksam verbindbar ist, und dass das zusätzlich vorgesehene Getriebe (9) als Überlagerungsgetriebe ausgeführt ist.

2. Doppelkupplungsgetriebe nach dem vorstehenden Anspruch, **dadurch gekennzeichnet, dass** das zusätzlich vorgesehene Getriebe (9) als Planetenradgetriebe (9a) ausgeführt ist.

3. Doppelkupplungsgetriebe nach Anspruch 1 oder 2, **dadurch gekennzeichnet, dass** das Sonnenrad (11) des Planetenradgetriebes (9a) mit der ersten Getriebeeingangswelle (2) wirksam verbunden ist.

4. Doppelkupplungsgetriebe nach einem der vorstehenden Ansprüche, **dadurch gekennzeichnet, dass** die Planetenräder (12) des Planetenradgetriebes (9a) mit der zweiten Getriebeeingangswelle (3) wirksam verbunden sind.

5. Doppelkupplungsgetriebe nach einem der vorstehenden Ansprüche, **dadurch gekennzeichnet, dass** das Ringrad (13) des Planetenradgetriebes (9a) wirksam mit der Elektromaschine (5) verbunden ist.

6. Doppelkupplungsgetriebe nach einem der vorstehenden Ansprüche, **dadurch gekennzeichnet, dass** jeder Getriebeeingangswelle (2, 3) eine Triebwelle (6, 7) zugeordnet ist, die jeweils mit dem Abtrieb (8a) des Doppelkupplungsgetriebes (1) wirksam verbunden ist.

7. Doppelkupplungsgetriebe nach einem der vorstehenden Ansprüche, **dadurch gekennzeichnet, dass** das Doppelkupplungsgetriebe (1) zwei Teilgetriebe aufweist und das Planetenradgetriebe (9a) als Überlagerungsgetriebe zur Überlagerung der Drehmomente der beiden Teilgetriebe einsetzbar ist.

8. Doppelkupplungsgetriebe nach einem der vorstehenden Ansprüche, **dadurch gekennzeichnet, dass** das Planetenradgetriebe (9a) als Überlagerungsgetriebe bei einem Beschleunigungsvorgang des Kraftfahrzeuges einsetzbar ist und die Elektromaschine (5) als Elektromotor (5a) einsetzbar ist oder das Planetenradgetriebe (9a) als Überlagerungsgetriebe bei einem Bremsvorgang des Kraftfahrzeuges einsetzbar ist und die Elektromaschine als Generator (5b) einsetzbar ist.

9. Doppelkupplungsgetriebe nach einem der vorstehenden Ansprüche, **dadurch gekennzeichnet, dass** mit Hilfe der Elektromaschine (5) die frei laufende bei einer Schaltung zu synchronisierende Getriebeeingangswelle (2, 3) entsprechend synchronisierbar ist und/oder durch die Elektromaschine (5) ein Rückwärtsgang-Modus des Kraftfahrzeuges realisierbar ist.

10. Verfahren zur Steuerung eines Doppelkupplungsgetriebes (1) für ein Kraftfahrzeug, insbesondere mit einem Hybridantrieb, nach einem oder mehreren der Ansprüche 1 bis 9, wobei durch die erste Getriebeeingangswelle (2) und die der ersten Getriebeeingangswelle (2) zugeordneten Gangstufen im wesentlichen ein erstes Teilgetriebe und durch die zweite Getriebeeingangswelle (3) und die der zweiten Getriebeeingangswelle (3) zugeordneten Gangstufen im wesentlichen ein zweites Teilgetriebe gebildet ist, **dadurch gekennzeichnet, dass** in dem ersten und/oder in dem zweiten Teilgetriebe eine Gangstufe eingelegt ist oder eingelegt wird und zumindest in einem bestimmten Teilbereich des zusätzlich vorgesehenen Getriebes (9) die Drehzahldifferenz zwischen den beiden Teilgetrieben anliegt und hier die Elektromaschine (5) Drehmoment einleiten oder abgreifen kann.

11. Verfahren nach Anspruch 10, **dadurch gekennzeichnet, dass** die Drehzahldifferenz zwischen den beiden Teilgetrieben am Ringrad (13) des Planetengetriebes (9a) anliegt und hier die Elektromaschine (5) Drehmoment einleiten oder abgreifen kann.

12. Verfahren nach Anspruch 11, **dadurch gekennzeichnet, dass** die Elektromaschine (5) als Starter für die Verbrennungsmotor (VKM) eingesetzt wird.

13. Verfahren nach einem der Ansprüche 10 oder 11, **dadurch gekennzeichnet, dass** die Elektromaschine (5) als Elektromotor (5a) bei einem Beschleunigungsvorgang zusätzlich Drehmoment in das Getriebe (1) einleitet.

14. Verfahren nach einem der Ansprüche 10 bis 12, **dadurch gekennzeichnet, dass** die Elektromaschine (5) als Generator (5b) bei einem Bremsvorgang zusätzlich Drehmoment abgreift.

15. Verfahren nach einem der Ansprüche 10 bis 13, **dadurch gekennzeichnet, dass** im Elektrobetrieb die Elektromaschine (5) als Elektromotor (5a) das Fahrzeug antreibt.

16. Verfahren nach einem der Ansprüche 10 bis 14, **dadurch gekennzeichnet, dass** aus dem Elektrobetrieb die Verbrennungsmaschine (VKM) gestartet bzw., auf die entsprechende Drehzahl hochgeschleppt wird.

17. Verfahren nach einem der Ansprüche 10 bis 16, **dadurch gekennzeichnet, dass** zwischen Elektrobetrieb und Verbrennungsbetrieb hin- und hergeschaltet wird.

18. Verfahren nach einem der Ansprüche 10 bis 16, **dadurch gekennzeichnet, dass** die Elektromaschine (5) zur Synchronisation der jeweils freilaufenden Getriebeeingangswelle (2, 3) eingesetzt wird.

19. Verfahren nach einem der Ansprüche 10 bis 13, **dadurch gekennzeichnet, dass** mit Hilfe der Drehrichtungsumkehr der Elektromaschine (5) eine Rückwärtsfahrt des Fahrzeugs realisiert wird.

## Claims

1. Double clutch transmission (1) for a motor vehicle, in particular having a hybrid drive, having a first transmission input shaft (2) and having a second transmission input shaft (3), it being possible for the first transmission input shaft (2) to be operatively connected via a first clutch (K1), and for the second transmission input shaft (3) to be operatively connected via a second clutch (K2), to an internal combustion engine (VKM), in particular to a crankshaft of the internal combustion engine (VKM), a plurality of gear stages (I, II, III, IV) which can be engaged and/or disengaged being provided, the sequential gear stages being assigned to different transmission input shafts (2, 3), in particular the first, third and/or fifth gear stage being assigned to the first transmission input shaft (2) and the second, fourth and/or sixth gear stage being assigned to the second transmission input shaft (3), an electric machine (5) being provided, and it being possible for the electric machine (5) to be operated as an electric motor (5a) and/or generator (5b), and it being possible for the electric machine (5) to be operatively connected rotatably to one of the transmission input shafts (2, 3), **characterized in that** the electric machine (5) can be operatively connected via an additionally provided transmission (9) both to the first and to the second transmission input shaft (2, 3), and **in that** the additionally provided transmission (9) is configured as a superimposing transmission.

2. Double clutch transmission according to the preceding claim, **characterized in that** the additionally provided transmission (9) is configured as a planetary gear transmission (9a).

3. Double clutch transmission according to Claim 1 or 2, **characterized in that** the sun gear (11) of the planetary gear transmission (9a) is operatively connected to the first transmission input shaft (2).

4. Double clutch transmission according to one of the preceding claims, **characterized in that** the planetary gears (12) of the planetary gear mechanism (9a) are operatively connected to the second transmission input shaft (3).

5. Double clutch transmission according to one of the preceding claims, **characterized in that** the ring gear (13) of the planetary gear transmission (9a) is operatively connected to the electric machine (5).

6. Double clutch transmission according to one of the preceding claims, **characterized in that** each transmission input shaft (2, 3) is assigned a drive shaft (6, 7) which is operatively connected in each case to the output (8a) of the double clutch transmission (1).

7. Double clutch transmission according to one of the preceding claims, **characterized in that** the double clutch transmission (1) has two component transmissions, and the planetary gear transmission (9a) can be used as a superimposing transmission for superimposing the torques of the two component transmissions.

8. Double clutch transmission according to one of the preceding claims, **characterized in that** the planetary gear transmission (9a) can be used as a superimposing transmission during an acceleration operation of the motor vehicle and the electric machine (5) can be used as an electric motor (5a), or the planetary gear transmission (9a) can be used as a superimposing transmission during a braking operation of the motor vehicle and the electric machine can be used as a generator (5b).

9. Double clutch transmission according to one of the preceding claims, **characterized in that** the freewheeling transmission input shaft (2, 3) which is to be synchronized during a shifting operation can be synchronized correspondingly with the aid of the electric machine (5), and/or a reverse gear mode of the motor vehicle can be realized by way of the electric machine (5).

10. Method for controlling a double clutch transmission (1) for a motor vehicle, in particular having a hybrid drive, according to one or more of Claims 1 to 9, a first component transmission being formed substantially by way of the first transmission input shaft (2) and the gear stages which are assigned to the first transmission input shaft (2), and a second component transmission being formed substantially by way of the second transmission input shaft (3) and the gear stages which are assigned to the second transmission input shaft (3), **characterized in that** a gear stage is engaged or is being engaged in the first and/or in the second component transmission, and the rotational speed difference between the two component transmissions prevails at least in a defined part region of the additionally provided transmission (9), and it being possible for the electric machine (5) to introduce or tap off torque here.

11. Method according to Claim 10, **characterized in that** the rotational speed difference between the two component transmissions prevails at the ring gear (13) of the planetary transmission (9a), and it being possible for the electric machine (5) to introduce or tap off torque here.

12. Method according to Claim 11, **characterized in that** the electric machine (5) is used as a starter for the internal combustion engine (VKM).

13. Method according to either of Claims 10 and 11, **characterized in that**, as an electric motor (5a), the electric machine (5) additionally introduces torque into the transmission (1) during an acceleration operation.

14. Method according to one of Claims 10 to 12, **characterized in that**, as a generator (5b), the electric machine (5) additionally taps off torque during a braking operation.

15. Method according to one of Claims 10 to 13, **characterized in that**, in electric operation the electric machine (5) as the electric motor (5a) drives the vehicle.

16. Method according to one of Claims 10 to 14, **characterized in that** the internal combustion engine (VKM) is started or is sped up to the corresponding rotational speed from the electric operation.

17. Method according to one of Claims 10 to 16, **characterized in that** a switchover is carried out to and fro between electric operation and combustion operation.

18. Method according to one of Claims 10 to 16, **characterized in that** the electric machine (5) is used for the synchronization of the respectively freewheeling transmission input shaft (2, 3).

19. Method according to one of Claims 10 to 13, **characterized in that** reverse driving of the vehicle is realized with the aid of the rotational direction reversal of the electric machine (5).

## Revendications

1. Boîte de vitesses à double embrayage (1) pour un véhicule automobile, en particulier avec un entraînement hybride, comprenant un premier arbre d'entrée de boîte de vitesses (2) et un deuxième arbre d'entrée de boîte de vitesses (3), le premier arbre d'entrée de boîte de vitesses (2) pouvant être connecté activement par le biais d'un premier embrayage (K1) et le deuxième arbre d'entrée de boîte de vitesses (3) pouvant être connecté activement par le biais d'un deuxième embrayage (K2) à un moteur à combustion interne (VKM), en particulier à un vilebrequin du moteur à combustion interne (VKM), plusieurs rapports de vitesses (I, II, III, IV) qui peuvent être enclenchés et/ou désenclenchés étant prévus, les rapports de vitesses successifs étant associés à différents arbres d'entrée de boîte de vitesses (2, 3), en particulier, les premier, troisième et/ou cinquième rapports de vitesse étant associés au premier arbre d'entrée de boîte de vitesses (2) et les deuxième, quatrième et/ou sixième rapports de vitesse étant associés au deuxième arbre d'entrée de boîte de vitesses (3), une machine électrique (5) étant prévue, et la machine électrique (5) pouvant fonctionner en tant que moteur électrique (5a) et/ou générateur (5b), et la machine électrique (5) pouvant être connectée activement en rotation à l'un des arbres d'entrée de boîte de vitesses (2, 3), **caractérisée en ce que** la machine électrique (5) peut être connectée activement par le biais d'une boîte de vitesses supplémentaire (9) à la fois au premier et au deuxième arbre d'entrée de boîte de vitesses (2, 3), et **en ce que** la boîte de vitesses supplémentaire (9) est réalisée sous forme de boîte de vitesses à superposition.

2. Boîte de vitesses à double embrayage selon la revendication précédente, **caractérisée en ce que** la boîte de vitesses supplémentaire (9) est réalisée sous forme de boîte de vitesses à engrenage planétaire (9a).

3. Boîte de vitesses à double embrayage selon la revendication 1 ou 2, **caractérisée en ce que** la roue solaire (11) de la boîte de vitesses à engrenage planétaire (9a) est connectée activement au premier arbre d'entrée de boîte de vitesses (2).

4. Boîte de vitesses à double embrayage selon l'une quelconque des revendications précédentes, **caractérisée en ce que** les satellites (12) de la boîte de vitesses à engrenage planétaire (9a) sont connectés activement au deuxième arbre d'entrée de boîte de vitesses (3).

5. Boîte de vitesses à double embrayage selon l'une quelconque des revendications précédentes, **caractérisée en ce que** la couronne (13) de la boîte de vitesses à engrenage planétaire (9a) est connectée activement à la machine électrique (5).

6. Boîte de vitesses à double embrayage selon l'une quelconque des revendications précédentes, **caractérisée en ce qu'**un arbre d'entraînement (6, 7) est associé à chaque arbre d'entrée de boîte de vitesses (2, 3), lequel est connecté activement à chaque fois à la prise de force (8a) de la boîte de vitesses à double embrayage (1).

7. Boîte de vitesses à double embrayage selon l'une quelconque des revendications précédentes, **caractérisée en ce que** la boîte de vitesses à double embrayage (1) présente deux boîtes de vitesses partielles et la boîte de vitesses à engrenage planétaire (9a) peut être utilisée en tant que boîte de vitesses à superposition pour la superposition des couples des deux boîtes de vitesses partielles.

8. Boîte de vitesses à double embrayage selon l'une quelconque des revendications précédentes, **caractérisée en ce que** la boîte de vitesses à engrenage planétaire (9a) peut être utilisée en tant que boîte de vitesses à superposition dans une opération d'accélération du véhicule automobile et la machine électrique (5) peut être utilisée en tant que moteur électrique (5a) ou la boîte de vitesses à engrenage planétaire (9a) peut être utilisée en tant que boîte de vitesses à superposition dans une opération de freinage du véhicule automobile et la machine électrique peut être utilisée en tant que générateur (5b).

9. Boîte de vitesses à double embrayage selon l'une quelconque des revendications précédentes, **caractérisée en ce qu'**à l'aide de la machine électrique (5), l'arbre d'entrée de boîte de vitesses tournant librement (2, 3), devant être synchronisé lors d'un changement de vitesses, peut être synchronisé de manière correspondante et/ou un mode de vitesse de marche arrière du véhicule automobile peut être réalisé par la machine électrique (5).

10. Procédé de commande d'une boîte de vitesses à double embrayage (1) pour un véhicule automobile, en particulier avec un entraînement hybride, selon l'une quelconque ou plusieurs des revendications 1 à 9, dans lequel le premier arbre d'entrée de boîte de vitesses (2) et les rapports de vitesses associés au premier arbre d'entrée de boîte de vitesses (2) forment essentiellement une première boîte de vitesses partielles et le deuxième arbre d'entrée de boîte de vitesses (3) et les rapports de vitesses associés au deuxième arbre d'entrée de boîte de vitesses (3) forment essentiellement une deuxième boîte de vitesses partielles, **caractérisé en ce que** dans la première et/ou dans la deuxième boîte de vitesses partielles, un rapport de vitesse est enclenché ou sera enclenché et au moins dans une région partielle déterminée de la boîte de vitesses supplémentaire (9), la différence de vitesses de rotation entre les deux boîtes de vitesses partielles s'applique et la machine électrique (5) peut alors introduire ou prélever un couple.

11. Procédé selon la revendication 10, **caractérisé en ce que** la différence de vitesse de rotation entre les deux boîtes de vitesses partielles s'applique au niveau de la couronne (13) de la boîte de vitesses à engrenage planétaire (9a) et la machine électrique (5) peut alors introduire ou prélever ici un couple.

12. Procédé selon la revendication 11, **caractérisé en ce que** la machine électrique (5) est utilisée en tant que démarreur pour le moteur à combustion interne (VKM).

13. Procédé selon l'une quelconque des revendications 10 ou 11, **caractérisé en ce que** la machine électrique (5), en tant que moteur électrique (5a), introduit en outre un couple dans la boîte de vitesses (1) lors d'une opération d'accélération.

14. Procédé selon l'une quelconque des revendications 10 à 12, **caractérisé en ce que** la machine électrique (5), en tant que générateur (5b), prélève en outre un couple lors d'une opération de freinage.

15. Procédé selon l'une quelconque des revendications 10 à 13, **caractérisé en ce qu'**en mode de fonctionnement électrique, la machine électrique (5) entraîne le véhicule en tant que moteur électrique (5a).

16. Procédé selon l'une quelconque des revendications 10 à 14, **caractérisé en ce qu'**à partir du mode de fonctionnement électrique, le moteur à combustion interne (VKM) est démarré ou est accéléré à la vitesse de rotation correspondante.

17. Procédé selon l'une quelconque des revendications 10 à 16, **caractérisé en ce qu'**il est possible de commuter d'avant en arrière entre le mode de fonctionnement électrique et le mode de fonctionnement à combustion.

18. Procédé selon l'une quelconque des revendications 10 à 16, **caractérisé en ce que** la machine électrique (5) est utilisée pour synchroniser l'arbre d'entrée de boîte de vitesses respectif tournant en roue libre (2, 3).

19. Procédé selon l'une quelconque des revendications 10 à 13, **caractérisé en ce qu'**une conduite en marche arrière du véhicule est réalisée à l'aide de l'inversion du sens de rotation de la machine électrique (5).
